(19) Europäisches Patentamt
European Patent Office
Office européen des brevets

(11) **EP 1 984 707 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **07703001.3**

(22) Anmeldetag: **24.01.2007**

(51) Int Cl.:
*G01F 23/28* (2006.01)    *G01F 23/292* (2006.01)
*G01F 23/296* (2006.01)   *G01S 7/292* (2006.01)

(86) Internationale Anmeldenummer:
**PCT/EP2007/000596**

(87) Internationale Veröffentlichungsnummer:
**WO 2007/093270 (23.08.2007 Gazette 2007/34)**

(54) **PAARWEISE ZF-ABTASTUNG FÜR PULS-LAUFZEIT-FÜLLSTANDSENSOREN**

PAIRED INTERMEDIATE FREQUENCY (IF) SAMPLING FOR PULSE TRANSIT TIME LEVEL SENSORS

BALAYAGE DE FRÉQUENCES MOYENNES PAR PAIRES DESTINÉ À DES DÉTECTEURS DE NIVEAU PAR DURÉE DE PROPAGATION D'IMPULSIONS

(84) Benannte Vertragsstaaten:
**DE FR GB**

(30) Priorität: **13.02.2006 US 772701 P
13.02.2006 DE 102006006572**

(43) Veröffentlichungstag der Anmeldung:
**29.10.2008 Patentblatt 2008/44**

(73) Patentinhaber: **VEGA Grieshaber KG
77709 Wolfach (DE)**

(72) Erfinder:
• **GRIESSBAUM, Karl**
**77796 Mühlenbach (DE)**
• **WELLE, Roland**
**77709 Oberwolfach (DE)**
• **HAAS, Jürgen**
**77709 Oberwolfach (DE)**
• **FEHRENBACH, Josef**
**77716 Haslach (DE)**

(74) Vertreter: **Maiwald Patent- und
Rechtsanwaltsgesellschaft mbH
Elisenhof
Elisenstraße 3
80335 München (DE)**

(56) Entgegenhaltungen:
**EP-A1- 0 699 307      EP-A1- 1 235 059
EP-A2- 0 573 034      DE-A1- 10 140 346
DE-A1- 10 140 821      DE-A1- 10 164 030
US-A- 5 594 341       US-A1- 2002 176 522
US-A1- 2003 021 186**

• **BARSHAN B ET AL: "Active sonar for obstacle localization using envelope shape information" SPEECH PROCESSING 2, VLSI, UNDERWATER SIGNAL PROCESSING. TORONTO, MAY 14 - 17, 1991, INTERNATIONAL CONFERENCE ON ACOUSTICS, SPEECH & SIGNAL PROCESSING. ICASSP, NEW YORK, IEEE, US, Bd. VOL. 2 CONF. 16, 14. April 1991 (1991-04-14), Seiten 1273-1276, XP010043256 ISBN: 0-7803-0003-3**

**Beschreibung**

Verwandte Anmeldungen

Die vorliegende Anmeldung beansprucht die Priorität der US Provisional Patentanmeldung Nr. 60/772,701, eingereicht am 13.Februar 2006 und der deutschen Patentanmeldung Nr. 10 2006 006 572.7 eingereicht am 13. Februar 2006.

Technisches Gebiet

Die vorliegende Erfindung betrifft die Füllstandmessung. Insbesondere betrifft die vorliegende Erfindung ein Verfahren zur Füllstandmessung für einen Puls-Laufzeit-Füllstandsensor, und ein Füllstandmessgerät, das nach dem Puls-Laufzeit-Verfahren den Füllstand eines Füllguts in einem Behälter bestimmt.

Hintergrund der Erfindung

Zur kontinuierlichen Füllstandbestimmung in Behältern, die beispielsweise Flüssigkeiten oder Schüttgüter enthalten, werden oftmals Sensoren verwendet, die nach dem Puls-Laufzeit-Verfahren die Laufzeit von elektromagnetischen oder akustischen Wellen vom Sensor zur Füllgutoberfläche und zurück messen. Aus dem aus der Puls-Laufzeit über die Wellenausbreitungsgeschwindigkeit ermittelten Abstand zwischen Sensor und Füllgutoberfläche ist bei bekanntem Montageort des Sensors relativ zum Behälterboden die gesuchte Füllhöhe unmittelbar zu berechnen.

Akustische Wellen werden von sogenannten Ultraschall-Füllstandsensoren überwiegend etwa im Bereich von 10kHz bis zu100kHz mittels elektromechanischer Schallwandler erzeugt und abgestrahlt. Die reflektierten Schallpulse werden entweder vom gleichen Schallwandler oder einem zweiten, nur für den Empfang vorgesehenen Wandler, empfangen und hinsichtlich ihrer Laufzeit bezogen auf den Sendezeitpunkt ausgewertet.

Elektromagnetische Wellen, die in einem Frequenzbereich zwischen etwa 0,5 und 100 GHz liegen können, werden vom Sensor meist über Antennen abgestrahlt und wieder empfangen. Daneben sind Geräte bekannt, die die Welle entlang eines Wellenleiters vom Sensor zum Füllgut und zurück leiten. Die Reflexion der Wellen an der Füllgutoberfläche beruht auf der Änderung der Ausbreitungsimpedanz für die Welle an dieser Stelle.

Das Pulsradarverfahren bedient sich der Erzeugung kurzer kohärenter Mikrowellenpulse, sogenannter Bursts, und ermittelt die direkte Zeitdauer zwischen Aussendung und Empfang der Pulse. Die zu messenden Zeitabstände sind bei üblichen Messentfernungen im Bereich bis zu einigen Metern äußerst kurz, weshalb bei Pulsradarsensoren das empfangene Echosignal zweckmäßigerweise durch ein Zeittransformationsverfahren zeitlich gedehnt wird. Ein solches Verfahren ist in der DE 3107444 beschrieben. Es liefert ein gedehntes Echosignal, das dem empfangenen hochfrequenten Sende- und Empfangssignal entspricht, aber zeitlich beispielsweise um einen Faktor zwischen 10 000 und 100 000 langsamer abläuft. Aus einer Trägerschwingungsfrequenz des Mikrowellenpulses von beispielsweise 5,8 GHz wird eine Trägerschwingungsfrequenz des zeitgedehnten Echopulses zwischen beispielsweise 58 kHz und 580 kHz. Dieses intern durch die Zeittransformation entstandene Signal wird allgemein auch als Zwischenfrequenzsignal oder kurz ZF-Signal bezeichnet und liegt üblicherweise etwa zwischen 10kHz und 1MHz, beispielsweise zwischen 50kHz und 200kHz. Dieses ZF-Signal ist wie erwähnt ein zeitgedehntes Abbild des zeitlichen Verlaufs der gesendeten und empfangenen Mikrowellenpulse. Sowohl vom Frequenzbereich als auch dem Charakter des Amplitudenverlaufs ähneln sich ZF-Signal des Pulsradarverfahrens und Echosignal des Ultraschallverfahrens sehr stark, weshalb die weitere Verarbeitung und Auswertung dieser Signale zur Ermittlung der relevanten Echolaufzeit und damit Messentfernung bis auf geringe Unterschiede gleich ist. Wenn also in der weiteren Beschreibung von ZF-Signalen die Rede ist, sollen darunter nicht nur die zeitgedehnten Repräsentationen der Mikrowellensignale sondern auch die prinzipiell gleich aussehenden Ultraschall-Echosignale verstanden werden.

Ein ZF-Signal enthält einen zeitlichen Ablauf von einzelnen Pulsen, angefangen von einem vom Sendepuls abgeleiteten Referenzpuls bzw. -echo über verschiedene Pulse bzw. Echos von Reflexionsstellen innerhalb des Ausbreitungswegs der Wellen, an denen sich die Impedanz des Ausbreitungsmediums ändert. Jeder Puls besteht aus einer Trägerschwingung einer bestimmten festgelegten Frequenz mit einem durch die Form des Sendepulses festgelegten pulsförmigen Amplitudenverlauf. Die Gesamtheit aller Echos über einer gewissen Zeit zwischen Auftreten des Referenzechos und der für einen interessierenden Messbereich maximal erforderlichen Laufzeit bildet das ZF-Signal. Ein Messzyklus eines betreffenden Füllstandsensors ist gekennzeichnet durch die Bildung mindestens eines Teils eines ZF-Signals, üblicherweise aber eines oder mehrerer kompletter ZF-Signale und einer anschließenden Signalverarbeitung, Auswertung, Messwertbildung und Messwertausgabe, die sich auf das gebildete ZF-Signal stützen. Eine periodische Wiederholung der Messzyklen garantiert eine Aktualisierung der Messwerte zur Verfolgung sich ändernder Füllstände.

Um aus einer gegebenenfalls auftretenden Vielfalt von Echos innerhalb eines ZF-Signals jenes Echo von der Füllgutoberfläche gegenüber den zusätzlich auftretenden Störechos zu separieren, ist die Erkennung der Einzelechos anhand von charakteristischen Merkmalen notwendig. Ein wichtiges Merkmal ist der Verlauf der Amplitude eines Echos mit Amplitudenanstieg am Beginn, Maximalamplitude und Amplitudenabfall am Echoende. Diesen Amplitudenverlauf erhält man durch Bildung der Hüllkurve des ZF-Signals. Bei einer Hüllkurvenbildung geht üblicherweise die Information über den Phasenverlauf der Trägerschwingung der Echos verloren. Da aber durch Ausnutzung der Kenntnis des Phasenverlaufs unter Umständen die Messgenauigkeit deutlich erhöht werden kann, sind Verfahren bekannt, neben der reinen Hüllkurveninformation auch die Phaseninformation eines ZF-Signals auszuwerten.

Die gesuchte Laufzeit des Echos von der Füllgutoberfläche ergibt sich aus dem zeitlichen Abstand von Referenzecho und Füllgutecho. Dieser lässt sich aus dem Abstand zweier charakteristischer Punkte der Hüllkurve ermitteln, z.B. dem Abstand der Maxima der beiden Echos oder von Hüllkurvenpunkten auf der Echoflanke, die in einem definierten Amplitudenverhältnis zum Maximum stehen. Durch die Phaseninformation kann diese von der Hüllkurve abgeleitete Laufzeitinformation korrigiert werden, wodurch sich eine erhöhte Genauigkeit ergibt.

Ein Beispiel für solch eine zweigeteilte Signalverarbeitung und Auswertung des ZF-Signals findet sich in der DE 44 07 369. Das dort beschriebene Füllstandmessgerät umfasst einen analogen Signalverarbeitungskanal zur Bildung der Hüllkurve und einen dazu parallelen Kanal mit einem analogen Quadraturdemodulator für das ZF-Signal zum Erzeugen eines den Realteil des ZF-Signals repräsentierenden ersten und eines den Imaginärteil repräsentierenden zweiten Quadratursignals. Durch den analogen Aufbau der beiden Kanäle ergeben sich gewisse durch Bauteiltoleranzen und Langzeitdrift bedingte Schwierigkeiten der Signalverarbeitung, die zu einer Verminderung der Messgenauigkeit führen können.

Außerdem ist zu beachten, dass die Amplitudenunterschiede zwischen Echos gut reflektierender Oberflächen im Nahbereich und schlecht reflektierender Oberflächen am Messbereichsende sehr groß sind. Amplitudenunterschiede von über 120dB entsprechend einem Spannungsverhältnis von 1 zu einer Million können auftreten und sind von der Signalverarbeitung des Sensors zu behandeln. Wird zur Hüllkurvenbildung das geläufige Verfahren der Ein- oder Zweiweggleichrichtung, beispielsweise über analoge Diodenschaltungen, mit nachfolgender Tiefpassfilterung angewendet, ist ein solcher Dynamikumfang kaum zu bewältigen. Zur Entschärfung der Anforderungen ist es bekannt, einen ZF-Signal-Verstärker mit variabler, der Echolaufzeit angepasster Verstärkung einzusetzen. Diese als STC (sensitivity time control) bekannte Verstärkungssteuerung reduziert den erforderlichen Dynamikumfang aller nachfolgenden Stufen der Signalverarbeitung. Alternativ dazu ist es möglich, die Verstärkung stufenweise innerhalb des ZF-Signals oder zwischen verschiedenen aufeinander folgenden ZF-Signalen zu variieren.

Die Amplitudeninformationen der einzelnen Stufen mit reduziertem Dynamikumfang können anschließend zu einer Information mit vollem Dynamikumfang summiert werden. Als weitere sehr elegante Methode hat sich die Logarithmierung des Signals zur Komprimierung der Hüllkurvenamplituden erwiesen. Ein Beispiel einer solchen Signalverarbeitung mit Hardware-Logarithmierer, der gleichzeitig zur Logarithmierung auch die Gleichrichtung des Signals vornimmt und damit zusammen mit einer nachfolgenden Tiefpassfilterung die Bildung der logarithmischen Hüllkurve ermöglicht, findet sich in der DE 101 64 030. Dort ist auch eine Lösung aufgezeigt, wie die Phaseninformation ebenfalls aus dem logarithmierten Signal gewonnen werden kann und damit die zweigleisige Verarbeitung von Amplitude und Phase auf ein Mindestmaß reduzierbar ist.

Um die Nachteile einer weitgehend analogen Signalverarbeitung, beispielsweise Langzeitdrift, Bauteiltoleranzen und fehlende Flexibilität an sich verändernde Sensorparameter, zu vermeiden, ist eine überwiegend digitale Verarbeitung des ZF-Signals anzustreben. Dazu bietet sich an, das ZF-Signal nach einer eventuellen anlogen Signalverstärkung und Tiefpass- bzw. Bandpassfilterung zur Vermeidung von Aliasing abzutasten und die zeitdiskreten Abtastwerte in einen den Spannungswert repräsentierenden Digitalwert zu wandeln. Dieses Verfahren wird als A/D-Wandlung bezeichnet. Eine digital gespeicherte Abtastfolge repräsentiert das analoge ZF-Signal mit allen darin enthaltenen Echos. Sowohl Amplituden- als auch Phaseninformation des ZF-Signals ist erhalten geblieben und der digitalen Weiterverarbeitung des Signals zugänglich. Problematisch allerdings sind die Anforderungen hinsichtlich der erforderlichen Abtastfrequenz, der Amplitudenauflösung der A/D-Wandlung und der Speicher- und Rechenbelastung der digitalen Signalverarbeitung. Deshalb sind auch Lösungen bekannt, die die analoge Signalverarbeitung mit logarithmischer Hüllkurvenbildung kombinieren mit der ZF-Digitalisierung. Aus der zum Schluss ebenfalls digitalisierten logarithmischen Hüllkurve werden die Echoamplituden ausgewertet, während aus dem digitalisierten ZF-Signal lediglich noch die zusätzliche Phaseninformation abzuleiten ist. Dadurch kann sich die ZF-Digitalisierung dahingehend vereinfachen, dass man sich ausschließlich auf die beiden Zeitbereiche innerhalb des Signals beschränken kann, die das Referenzecho und das interessierende Echo von der Füllgutoberfläche enthalten. Das spart Speicherplatz, Rechenzeit und bei eingepegelter ZF-Verstärkung auch Amplitudenauflösung des A/D-Wandlers. Allerdings ist auf der analogen Seite wieder höherer Schaltungsaufwand nötig.

Ein weiteres Verfahren der digitalen Abtastung der ZF-Kurve ist durch die DE 101 40 346 bekannt. Es zeichnet sich durch relativ geringe Abtastrate und einfache Bildung der Hüllkurve aus, erfordert aber einen erheblichen Synchronisationsaufwand zur Abtastung der ZF-Schwingungen genau in den Maxima der Trägerfrequenz.

US 2003/0021186 A1 beschreibt ein Verfahren zur Füllstandmessung, bei dem aus einem Füllstandecho eine Hüllkurve erhalten wird, die dann an diskreten Punkten abgetastet wird. Die Abtastung der Hüllkurve erfolgt in konstanten Zeitintervallen. Die sich daraus ergebenden Amplitudenwerte werden dann interpoliert.

EP 1 235 059 betrifft ein mit Mikrowellen arbeitendes Füllstandsmessgerät. Zum Erzeugen eines Füllstandsmesswerts aus einem Zwischenfrequenzsignal ZF umfasst das Füllstandsmessgerät eine Steuerungseinheit. Die Steuerungseinheit dient dazu, das Zwischenfrequenzsignal ZF so zu digitalisieren und abschnittsweise so abzuspeichern, dass zur Ermittlung des Füllstandsmesswerts gleichzeitig sowohl eine Amplitude als auch eine Phaseninformation über das Zwischenfrequenzsignal ZF in digitaler Form zur Verfügung gehalten wird.

Zusammenfassung der Erfindung

Es ist eine Aufgabe der vorliegenden Erfindung, ein verbessertes Verfahren und ein entsprechendes Schaltungskonzept für die Digitalisierung und anschließende Verarbeitung des ZF-Signals für Puls-Laufzeit-Sensoren anzugeben Diese Aufgabe wird durch ein Verfahren gemäß Anspruch 1 oder einen Puls-Laufzeit-Füllstandsensor gemäß Anspruch 13 gelöst.

Erfindungsgemäß ist ein Verfahren angegeben, bei dem das ZF-Signal zu diskreten Zeitpunkten abgetastet und in einen Digitalwert gewandelt wird, wobei die nachfolgende Verarbeitung der Digitalwerte aus jeweils genau zwei zeitlich benachbarten digitalen Abtastwerten mindestens einen neuen die ZF-Kurve charakterisierenden Wert errechnet.

Dies kann zu einer niedrigen Abtastrate, geringem Speicheraufwand, geringem Rechenaufwand zur digitalen Weiterverarbeitung hinsichtlich der Auswertung der Amplituden- und Phaseninformation, flexibler Anpassung an veränderliche Sensorparameter, hoher Signalempfindlichkeit und hoher Messgenauigkeit führen.

Gemäß einem weiteren Ausführungsbeispiel der vorliegenden Erfindung ist dieser Wert ein Hüllkurvenwert oder ein Wert, der die Phase beschreibt.

Es hat sich gezeigt, dass aus nur zwei Abtastpunkten des ZF-Signals näherungsweise ein Hüllkurvenwert sowie ein Phasenwert berechnet werden können, wenn der zeitliche Abstand zwischen den Abtastpunkten bekannt ist und gewisse zeitliche Abstände vermieden werden. Bei günstiger Wahl des Abtastabstands ist der errechnete Hüllkurvenwert so nahe am tatsächlichen Wert, dass der verbleibende Fehler vernachlässigbar klein ist.

Gemäß einem Ausführungsbeispiel der Erfindung lässt sich der verbleibende Fehler durch ein iteratives Näherungsverfahren noch weiter verkleinern, wenn die Steigung der Hüllkurve in dem zu berechnenden Punkt bekannt ist. Diese wiederum ist aus dem Verlauf mehrerer näherungsweise berechneter benachbarter Hüllkurvenpunkte sehr gut abschätzbar.

Erfindungsgemäß bilden immer zwei zeitlich aufeinander folgende Abtastwerte ein Abtastpaar, wobei der Zeitabstand ta1 zwischen den beiden Punkten eines Paares geringer ist als die Hälfte des Abstand ta2 zwischen aufeinander folgenden Abtastpaaren.

Weiter vorteilhaft ist es, den Zeitabstand zwischen den beiden Punkten eines Paares so zu wählen, dass er kleiner als eine halbe Periodendauer der ZF-Trägerschwingung ist. Alle Zeitabstände der beiden Punkte eines Abtastpaars, die einer halben Periodendauer der ZF oder einem Vielfachen davon entsprechen, müssen ohnehin vermieden werden. Ebenso ist es in bestimmten Fällen von Vorteil, den Abtastabstand für ein Punktepaar genau so zu steuern, dass er einem Viertel der Periodendauer der ZF-Trägerfrequenz entspricht. In anderen Fällen ist es aber auch von Vorteil, den Abstand auf etwa einem Achtel der Periodendauer der ZF festzulegen.

Erfindungsgemäß kann der Zeitabstand ta2 zwischen aufeinanderfolgenden Abtastpaaren so groß gewählt werden kann, dass die gesamte Abtastung und Digitalisierung des ZF-Signals nun nicht mehr dem Abtasttheorem von Nyquist genügt. Hintergrund dafür ist die begrenzte Bandbreite des ZF-Signals, die sich aus dem pulsförmigen Charakter der darin enthaltenen Echosignale ergibt. Durch diese Unterabtastung ist es möglich, dass einiges an Leistungsaufnahme der A/D-Wandlung, Speicherbedarf und Rechenzeit eingespart werden.

Einer ersten Ausgestaltung zufolge wählt man abhängig von ZF-Frequenz $f_{ZF}$ und ZF-Bandbreite B die Zeitabstände ta2 der aufeinanderfolgenden Abtastpaare nach folgenden Gesichtspunkten: Die Zeitdauer muss kleiner als der Kehrwert der doppelten ZF-Bandbreite sein, d.h. ta2 < 1/ (2*B), und die Abtastdauer darf nicht in dem Bereich zwischen ta2 = n/ (2*$f_{ZF}$+B) und ta2 = n/ (2*$f_{ZF}$-B) liegen, wobei n = 1,2,3, ....

Es gibt also sogenannte Sperrbereiche, in denen Aliasingeffekte der Abtastung das Signal verfälschen würden. Alle anderen Abstände zwischen den Abtastpaaren können aber gewählt werden, wodurch ein solchermaßen in einem Sensor umgesetztes Verfahren sehr flexibel an verschiedene Anforderungen angepasst werden kann.

Um unerwünschte Gleichspannungsanteile im abgetasteten ZF-Signal zu vermeiden, kann es angebracht sein, den Abstand ta2 zwischen den Abtastpaaren etwa in die Mitte zwischen zwei verbotene Bereiche zu legen. Dann können durch digitale Bandpassfilterung aller Digitalwerte einer ZF-Kurve sowohl ein störender Gleichspannungsanteil als auch weitere störende Signale, beispielsweise Rauschen, in der Nähe des ZF-Frequenzbands ausgefiltert werden. Diese digitale Bandpassfilterung kann beispielsweise getrennt auf jeweils die Gruppe aller ersten Abtastwerte aller Paare und die Gruppe aller zweiten Werte aller Paare der ZF-Kurve angewendet werden.

Alternativ zu der eben beschriebenen Wahl des Zeitabstands zwischen den Abtastpaaren kann dieser auch genau der Periodendauer der ZF-Trägerfrequenz oder einem geradzahligen Vielfachen davon entsprechen. In diesem Fall können zwar Rauschanteile, aber keine Gleichspannungsanteile des ZF-Signals digital ausgefiltert werden. Von Vorteil ist, dass in diesem Fall anstelle eines digitalen Bandpasses ein digitaler Tiefpass genügt.

Weiterhin hat es sich als vorteilhaft erwiesen, eine kohärente Scharmittelung der abgetasteten ZF-Werte durchzuführen. Der Begriff Scharmittelung bezeichnet eine Mittelwertbildung zwischen mehreren zeitlich korrespondierenden Werten verschiedener aufeinander folgender ZF-Kurven.

Erfindungsgemäß sind die zwei digitalen Abtastwerte zeitlich benachbart.

Gemäß einem Ausführungsbeispiel der vorliegenden Erfindung beträgt der Zeitabstand der beiden digitalen Abtastwerte ein Viertel der Periodendauer der ZF-Frequenz.

Gemäß einem Ausführungsbeispiel der vorliegenden Erfindung wird die Hüllkurve als Wurzel aus einer Quadratsumme der beiden digitalen Abtastwerte gebildet.

Gemäß einem Ausführungsbeispiel der vorliegenden Erfindung beträgt der Zeitabstand der beiden digitalen Abtastwerte ein Achtel der Periodendauer der ZF-Frequenz.

Gemäß einem weiteren Ausführungsbeispiel der vorliegenden Erfindung werden die digitalen Abtastwerte alternierend einer von zwei Gruppen zugeordnet, wobei der charakteristische Werts aus je einem Wert jeder Gruppe berechnet wird.

Vor der Berechnung kann eine digitale Filterung jeder Gruppe oder eine kohärente Scharmittelung jeder Gruppe durchgeführt werden.

Die Zeitabstände der digitalen Abtastwerte jeder Gruppe können kleiner als der Kehrwert aus einer doppelten Bandbreite sein.

Erfindungsgemäß sind die Zeitabstände der digitalen Abtastwerte jeder Gruppe größer als der Kehrwert aus doppelter Frequenz, sie genügen also nicht dem Abtasttheorem.

Gemäß einem weiteren Ausführungsbeispiel der vorliegenden Erfindung gilt für die Zeitabstände der digitalen Abtastwerte jeder Gruppe:

$$Zeitabstände \notin \left[ \frac{n}{2 * f_{ZF} + B} \cdots \frac{n}{2 * f_{ZF} - B} \right],$$

mit

$f_{ZF}$: ZF-Trägerfrequenz
B: Bandbreite des ZF-Signals
n: natürliche Zahl, n = 1,2,3, ...

Gemäß einem weiteren Ausführungsbeispiel der vorliegenden Erfindung liegen die Zeitabstände der digitalen Abtastwerte jeder Gruppe etwa in der Mitte zwischen zwei Sperrbereichen.

$$Zeitabstände \approx \frac{2 * f_{ZF} * (2 * n + 1) - B}{8 * f_{ZF}^2 - 2 * B^2}$$

Weiterhin kann eine digitale Bandfilterung jeder Gruppe mit einer Mittenfrequenz von etwa einem Viertel der Abtastfrequenz durchgeführt werden.

Die Zeitabstände der digitalen Abtastwerte jeder Gruppe können der Periodendauer der ZF-Frequenz oder einem Vielfachen davon entsprechen.

Auch kann eine digitale Tiefpassfilterung jeder Gruppe durchgeführt werden.

Der Hüllkurvenwert $HK_i$ und der Phasenwert $\varphi_i$ können aus den beiden Abtastwerten aus je einer Gruppe nach

$$HK_i = \sqrt{ZF1_i^2 + \frac{(ZF2_i - ZF1_i * \cos(\omega * (ta1_i)))^2}{\sin(\omega * (ta1_i))^2}}$$

$$\tan(\varphi_i) = \frac{\sin(\omega * t2_i) * ZF1_i - \sin(\omega * t1_i) * ZF2_i}{\sin(\omega * t1_i) * ZF2_i - \cos(\omega * t2_i) * ZF1_i}$$

berechnet werden, wobei gilt:

i: Laufvariable, i = 0,1,2,...
$HK_i$: Hüllkurvenwert
$\varphi_i$: Phasenwert
$ta1_i = t2_i - t1_i$; Zeitabstand zwischen Abtastung von $ZF1_i$ und $ZF2_i$
$ZF1_i$ : Abtastwert aus der ersten Gruppe
$t1_i$: Zeitpunkt der Abtastung von $ZF1_i$
$ZF2_i$: Abtastwert aus der zweiten Gruppe
$t2_i$: Zeitpunkt der Abtastung von $ZF2_i$
$\omega$: $= 2*\pi*f_{ZF}$; Kreisfrequenz der Trägerschwingung der ZF

Gemäß einem weiteren Ausführungsbeispiel der vorliegenden Erfindung wird der Phasenwert aus Abtastwerten und Hüllkurvenwerten errechnet.

Gemäß einem weiteren Ausführungsbeispiel der vorliegenden Erfindung ist der Zeitabstand zwischen zwei aufeinander folgenden Abtastpaaren größer als die halbe Periodendauer des ZF-Signals.

Gemäß einem weiteren Ausführungsbeispiel der vorliegenden Erfindung entspricht der Abstand zwischen zwei aufeinander folgenden Abtastpaaren nicht genau einer Periodendauer.

Gemäß einem weiteren Ausführungsbeispiel der vorliegenden Erfindung gilt für den Zeitabstand ta2 zwischen zwei aufeinander folgenden Abtastpaaren außerdem:

$$ta2 \notin \left[ \frac{n}{2 * f_{ZF} + B} \cdots \frac{n}{2 * f_{ZF} - B} \right],$$

mit

$f_{ZF}$: ZF-Trägerfrequenz
B: Bandbreite des ZF-Signals
n: natürliche Zahl, n = 1,2,3, ...

Gemäß einem weiteren Ausführungsbeispiel der vorliegenden Erfindung ist ein Puls-Laufzeit-Füllstandsensor zum Bestimmen eines Füllstands in einem Tank angegeben, der Füllstandsensor umfassend eine Abtastvorrichtung zum Abtasten eines ZF-Signals zu diskreten Zeitpunkten und zur Umwandlung von Abtastwerten in digitale Abtastwerte und eine digitale Signalverarbeitungsvorrichtung zur nachfolgenden Verarbeitung der digitalen Abtastwerte durch Berechnung mindestens eines neuen die ZF-Kurve charakterisierenden Werts aus jeweils genau zwei digitalen Abtastwerten.

Weitere Ausführungsbeispiele, Aufgaben und Vorteile der Erfindung ergeben sich aus den Unteransprüchen.

Im Folgenden werden mit Verweis auf die Figuren bevorzugte Ausführungsbeispiele der vorliegenden Erfindung beschrieben.

Kurze Beschreibung der Figuren

Fig. 1 Blockschaltbild eines Radar-Füllstandsensors.

Fig. 2 Signalverarbeitungsgraph einer Signalverarbeitung mit Quadraturdemodulator zur Auswertung von Hüllkurve und Phase.

Fig. 3 Blockschaltbild eines Radar-Füllstandsensors zur Ausführung des erfindungsgemäßen Verfahrens.

Fig. 4 a. und b. Signalverarbeitungsgraph der Signalverarbeitung nach verschiedenen Ausführungsformen der Erfindung.

Fig. 5 idealisiertes ZF-Signal.

Fig. 6 Ausschnitt aus dem ZF-Signal von Fig. 5 mit Markierung von ZF-Abtastungen nach dem Stand der Technik.

Fig. 7 Ausschnitt aus dem ZF-Signal von Fig. 5 mit Markierung von ZF-Abtastungen nach einer vorteilhaften Ausgestaltung des erfindungsgemäßen Verfahrens.

Fig. 8 Fehler bei der Hüllkurvenberechnung nach dem erfindungsgemäßen Verfahren vor und nach Anwendung der verbesserten Berechnungsmethode.

Fig. 9 Signalverarbeitungsgraph einer analogen und digitalen Signalverarbeitung nach einer bevorzugten Ausfuhrungsform der Erfindung.

Fig. 10 beispielhafte Darstellung von ZF-Signal, Abtastpunkten, Hüllkurve und Phasenwinkel bei Anwendung des erfindungsgemäßen Verfahrens.

Beschreibung beispielhafter Ausführungsformen

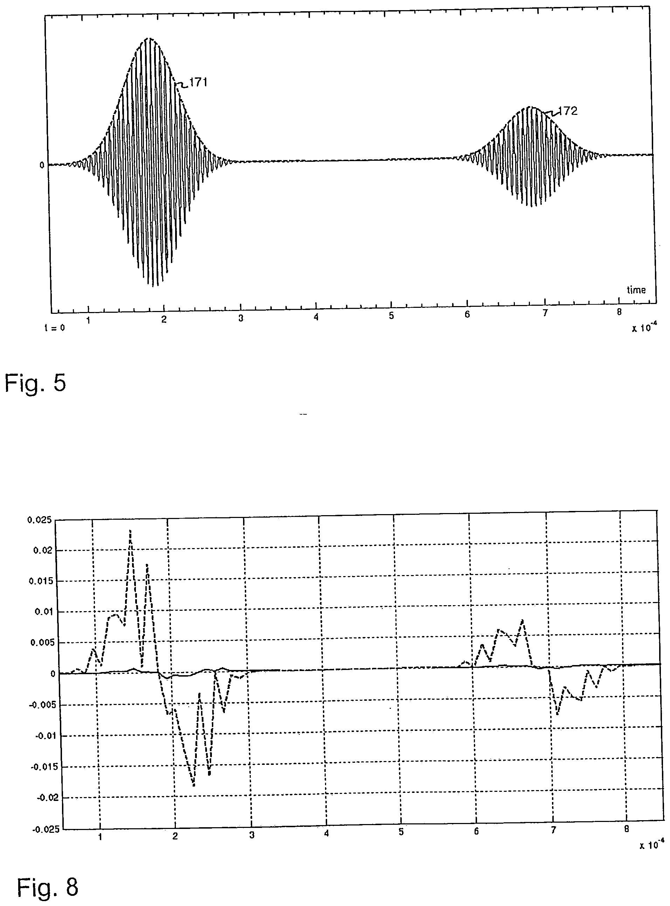

Die Darstellungen in den Figuren sind schematisch und nicht maßstäblich.
In der folgenden Figurenbeschreibung werden für die gleichen oder ähnlichen Elemente die gleichen Bezugsziffern verwendet.

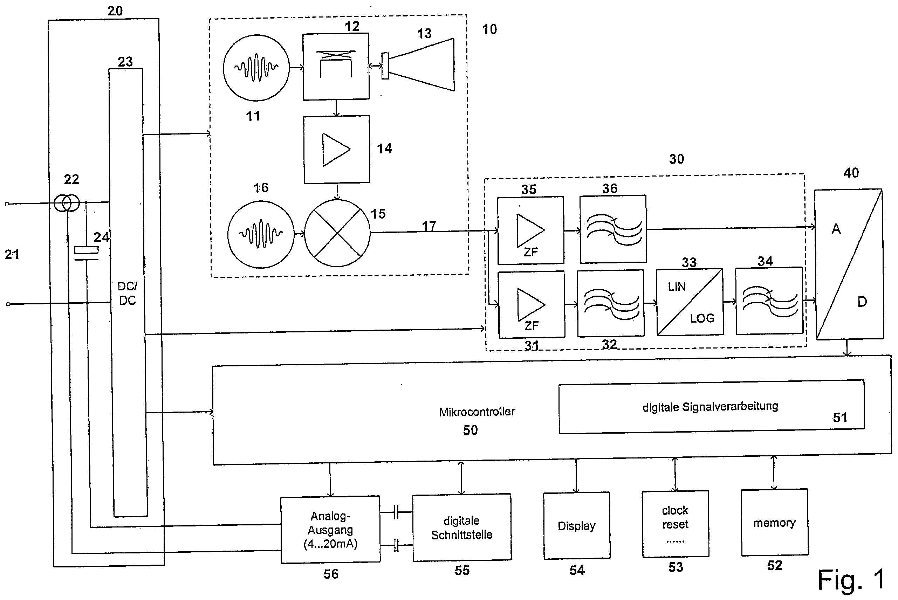

Fig. 1 zeigt einen Radar-Füllstandsensor, der nach dem Puls-Laufzeit-Verfahren arbeitet, mit einem Hochfrequenz-Schaltungsteil 10, einem Netzteil 20, einer analogen Signalverarbeitung 30, einem A/D-Wandler 40 und einem Mikrocontroller 50 mit Peripherie, beispielsweise Speicher 52, Display 54, Takt- und Resetschaltung 53. Der Sensor wird beispielsweise versorgt über die Zweidrahtleitung 21, über die auch der Füllstandwert in analoger Form, von der Stromquelle 22 und dem Regler 56 aufgeprägt als Strom 4 ... 20mA, ausgegeben wird. Auf der Versorgungsleitung 21 kann gleichzeitig auch eine digitale Kommunikation des Sensors mit der Außenwelt stattfinden. Dieses wird physikalisch durch die digitale Schnittstelle 55 ermöglicht. Das Netzteil enthält in dem Fachmann bekannter Weise einen DC/DC-Wandler 23 mit vorgeschaltetem Speicherkondensator 24 zur Versorgung aller anderen Schaltungsteile.
Die Hochfrequenz-Schaltung 10 enthält einen Sendegenerator 11 zur Erzeugung von hochfrequenten Sendepulsen mit vorgegebener Puls-Wiederholfrequenz. Diese werden über den Richtkoppler 12 oder alternativ über einen Zirkulator an die Antenne 13 geleitet und von dort abgestrahlt. Ein bestimmter Anteil des Sendepulses gelangt über den Richtkoppler 12 direkt zum Empfangsverstärker 14 und bildet eine zeitliche Referenzmarke oder einfacher ausgedrückt ein Referenzecho. Zeitlich danach folgt das Echo von der Reflexion des ausgesandten Sendepulses an der Füllgutoberfläche und eventuell Echos von weiteren vorhandenen Hindernissen im Ausbreitungsweg der Mikrowellen. Diese Echos werden von der Antenne 13 empfangen und über den Richtkoppler 12 zum Empfangsverstärker 14 geleitet. Sowohl das Referenzecho als auch die weiteren Echos gelangen nach der Verstärkung zum Abtaster bzw. Mischer 15. Dort werden sie mit einer zweiten Pulsfolge, die im Abtastgenerator 16 erzeugt wird, abgetastet. Als Ergebnis dieser Abtastung entsteht ein ZF-Signal 17, das in zeitgedehnter Form alle Echos des hochfrequenten Signals des Empfangsverstärkers 14 enthält. Es wird in diesem Zusammenhang verwiesen auf die DE 31 074 44, die die Funktionsweise dieses Zeitdehnungsverfahrens detailliert beschreibt. Ein stark vereinfachtes, idealisiertes ZF-Signal 17 zeigt Fig. 5. Für dieses Beispiel wurde eine Radar-Frequenz von 24 GHz und ein Zeitdehnungsfaktor von 150 000 gewählt. Dadurch entsteht eine ZF-Trägerschwingung von 160 kHz. Die sich aus der Lichtgeschwindigkeit ergebende Ausbreitungskonstante der Mikrowellen von 3,33 ns/m wird gedehnt auf 0,5 ms/m. Bedingt durch Hin- und Rückweg entsteht so eine Zeitdifferenz von 1 ms zwischen zwei Echos, deren gegenseitiger Abstand 1 m beträgt. Die Echos eines ZF-Signals sind über diesem zeitlichen Maßstab aufgetragen. In dem idealisierten ZF-Signal von Fig. 5 sind der Einfachheit halber nur zwei Echos mit einem gegenseitigen Abstand von 0,5 ms, entsprechend von 0,5 m, aufgetragen. Das Echo 171 stellt das Referenzecho dar, während das Echo 172 die Reflexion von der Füllgutoberfläche repräsentiert. Reale ZF-Signale enthalten wie bereits erwähnt oft noch weitere Störechos, die die Auswertung des Signals erschweren.
Die zeitliche Dauer des ZF-Signals richtet sich nach dem interessierenden Messbereich des Sensors. In Fig. 5 wurde zu Gunsten einer besseren Darstellung der ZF-Schwingung der Messbereich sehr kurz gewählt.
Jedes Echo des ZF-Signals besteht aus einer amplitudenmodulierten Trägerschwingung mit der ZF-Frequenz. Die gesuchte Abstandsinformation lässt sich aus dem Amplitudenverlauf und gegebenenfalls auch dem Phasenverlauf ermitteln.
Zur Gewinnung dieser Informationen wird nach dem in Fig. 1 dargestellten Verfahren bzw. der in Fig. 1 dargestellten Schaltung das ZF-Signal 17 über die analoge Signalverarbeitung 30 aufbereitet und danach mit dem Analog-Digital-Wandler 40 in diskrete Digitalwerte gewandelt. Diese Digitalwerte werden im Speicher 52 gesichert, so dass der Mikrocontroller 50 darauf zurückgreifen kann.
Die Aufbereitung des analogen Signals erfolgt in der dargestellten Ausführungsform weitgehend getrennt nach Amplituden- und Phaseninformation. Für die Amplitudeninformation hat sich bisher der Einsatz eines Hardware-Logarithmierers 33 angeboten, der das ZF-Signal gleichrichtet und logarithmiert. Zur Anpassung des ZF-Signals 17 an dessen Pegelbereich dient der Verstärker 31, während das Bandpassfilter 32 durch Ausfilterung möglichst aller Störsignale außerhalb des Frequenzbandes der ZF-Frequenz die Detektierbarkeit auch kleinster Echos verbessert. Der Tiefpass 34 hinter dem Logarithmierer glättet die entstandene Hüllkurve durch Entfernung von ZF-Frequenzanteilen. Übersteigt die Amplitudendynamik im ZF-Signal die Dynamik des Logarithmierers 33, so kann der ZF-Verstärker 31 in seiner Verstärkung variiert werden. Diese Verstärkungsänderung kann stufenweise oder kontinuierlich während der Dauer eines ZF-Signals erfolgen oder aber gestuft von einem ZF-Signal zum folgenden. Die so entstandenen digitalisierten logarithmischen Hüllkurven können bei Kenntnis der angewandten Verstärkungsänderung vom Mikrocontroller 50 so korrigiert und zusammengefasst werden, dass korrekte Amplitudeninformationen für alle Echos vorliegen.

Zur Gewinnung der Phaseninformation dient der Signalpfad mit dem ZF-Verstärker 35 und dem Bandpassfilter 36. Der ZF-Verstärker 35 passt das ZF-Signal in der Amplitude an den Spannungsbereich des A/D-Wandlers 40 an und das Bandpassfilter 36 dient gleichzeitig zur Ausfilterung von Rauschanteilen und als Anti-Aliasing-Filter für die nachfolgende Analog-Digital-Wandlung.

Bekanntlich ist beim Übergang von der analogen in die digitale Ebene das Nyquist-Abtasttheorem zu beachten, das besagt, dass die Abtastfrequenz mindestens doppelt so hoch sein muss wie die höchste im Signal vorkommende Frequenz. Um diese Forderung einzuhalten, empfiehlt sich zum einen die analoge Tiefpass- oder Bandpassfilterung des ZF-Signals vor der Abtastung und zum anderen eine eher großzügige Überabtastung, was in oben angeführtem Beispiel zu Abtastfrequenzen höher als 500 kHz führt. Da wie schon erwähnt die Amplitudendynamik im ZF-Signal sehr groß sein kann, muss ein A/D-Wandler mit hoher Amplitudenauflösung, d.h. mit hoher Bitbreite gewählt werden. Solche vergleichsweise schnellen und gleichzeitig hoch auflösenden A/D-Wandler sind aber unter den zusätzlichen Gesichtspunkten von geringer Leistungsaufnahme und vertretbaren Kosten kaum verfügbar. Hinsichtlich einer Reduzierung der erforderlichen Amplitudenauflösung des Wandlers lässt sich natürlich auch hier wie oben bei der Bildung der analogen Hüllkurve beschrieben ein analoger ZF-Verstärker 35 mit STC-Funktion oder Verstärker mit gestufter Verstärkung vorsehen. Bei gestufter Verstärkung können mehrere digitalisierte ZF-Signale unterschiedlicher Verstärkung rechnerisch zu einem kompletten ZF-Signal hoher Dynamik kombiniert werden. Gleiches gilt für die stufenweise Umschaltung der Verstärkung innerhalb eines ZF-Signals. Natürlich ist es auch möglich, statt einem in seiner Verstärkung veränderbaren ZF-Verstärker mehrere parallel aufgebaute Verstärker unterschiedlicher Verstärkung zu verwenden, deren Signale vom A/D-Wandler quasi gleichzeitig oder aber hintereinander folgend gewandelt werden. Es ist aber in jedem Fall zu beachten, dass zugunsten reduzierter Amplitudenauflösung des A/D-Wandlers höhere Anforderungen an Abtastfrequenz, Speicherbedarf und / oder Auslastung bzw. Verarbeitungsgeschwindigkeit des Mikrocontrollers 50 zur digitalen Signalverarbeitung gestellt werden.

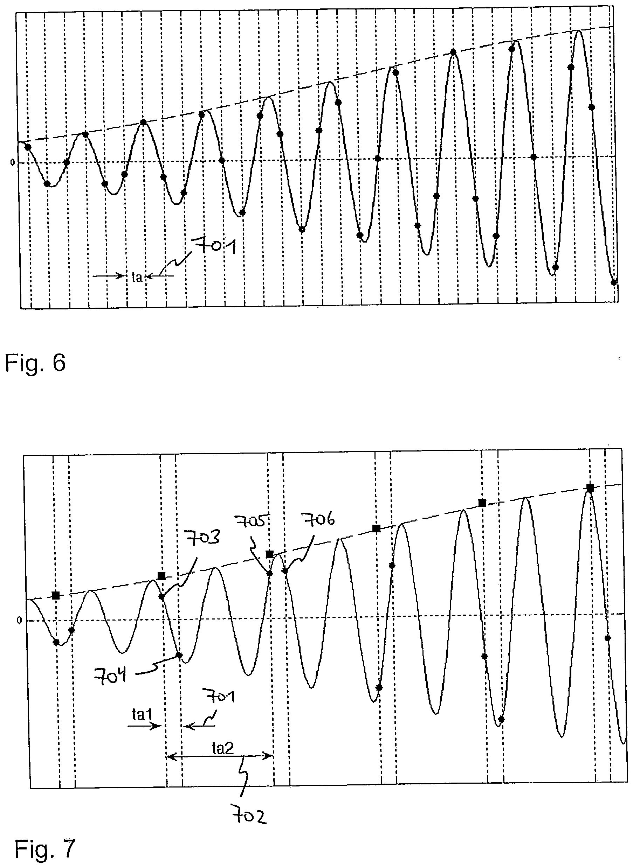

Ein Ausschnitt eines nach dem Nyquist-Abtasttheorem abgetasteten ZF-Signals zeigt Fig. 6. Dargestellt ist die erste Hälfte des Echos 172 aus Fig. 5 mit der ursprünglichen ZF-Kurve 17 und den äquidistanten Abtastpunkten im Zeitabstand ta, aus denen ein Digitalwert gebildet wird. Gestrichelt eingezeichnet ist außerdem die Hüllkurve. Der in diesem Beispiel dargestellte Abtastabstand ta beträgt 1,95 us entsprechend einer Abtastfrequenz von 512 kHz, was etwa das dreifache der ZF-Trägerfrequenz von 160 kHz ist.

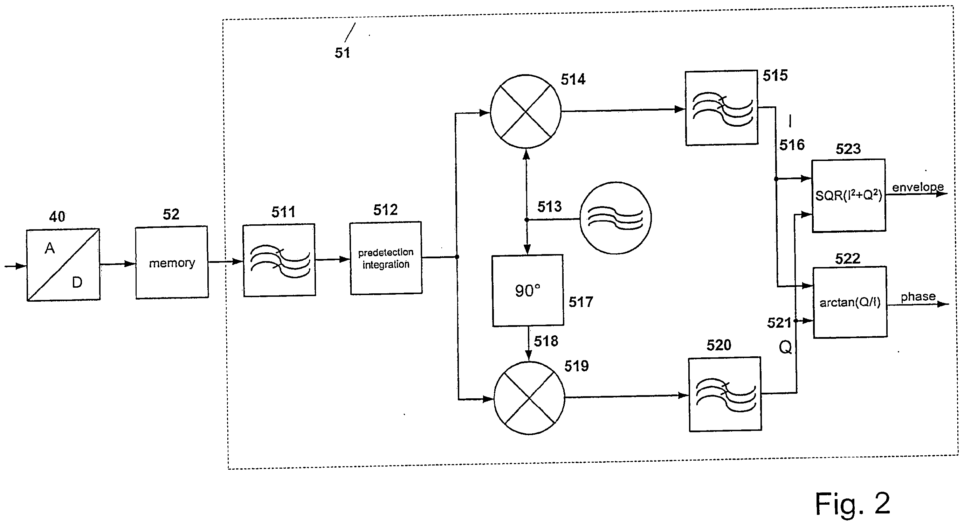

Für die digitale Signalverarbeitung dieser Abtastwerte innerhalb der Signalverarbeitungs-Software 51 bietet sich die Umsetzung des Verfahrens der Quadraturdemodulation an, das in Fig. 2 schematisiert dargestellt ist. Die vom A/D-Wandler 40 abgetasteten und digitalisierten ZF-Signalwerte, die im Speicher 52 vorliegen, können bei Bedarf zur Verbesserung des Signal-Rausch-Abstands im Bandfilter 511 gefiltert werden. Hierzu eignen sich dem Fachmann bekannte digitale Filteralgorithmen wie FIR- (finite impulse response) und IIR-(infinite impulse response) Filter. Eine weitere Verbesserung des Signal-Rausch-Abstands lässt sich bedarfsweise durch eine Scharmittelung oder predetection integration 512 erreichen. Darunter versteht man eine Mittelwertbildung von Abtastwerten verschiedener aufeinander folgender ZF-Signale. Gemittelt werden jeweils Werte, die zu gleichen relativen Zeitabständen in Bezug auf den Beginn des ZF-Signals abgetastet wurden.

Die so gefilterten ZF-Abtastwerte werden anschließend mit einem rechnerisch erzeugten Sinussignal 513 gleicher Frequenz im Multiplizierer 514 multipliziert. Das entspricht einer Frequenzumsetzung auf die Trägerfrequenz Null. Gleichzeitig entstehende höhere Frequenzanteile werden durch den digitalen Tiefpass 515 ausgefiltert. Parallel dazu werden die ZF-Signalwerte im Multiplizierer 519 mit einem rechnerischen Kosinussignal 518, welches sich aus der 90°-Verschiebung des Sinus im Phasenschieber 517 ergibt, multipliziert und im Tiefpassfilter 520 ebenfalls gefiltert. Die so errechneten Inphase- (I-) 516 und Quadratur- (Q-) 521 Komponenten dienen als Grundlage für die Berechnung von Phase (522) und gegebenenfalls auch Hüllkurve (523). Die Phase errechnet sich dabei aus dem Arcustangens des Quotienten, Phase = $\arctan(Q/I)$, die Hüllkurve aus der Wurzel der Quadratsumme, Hüllkurve = $SQR(I^2 + Q^2)$.

Diese digitale Quadraturdemodulation hat gegenüber analoger Realisierung zwar den Vorteil, nicht von Bauteiletoleranzen abhängig zu sein und sehr einfach an veränderte Bedingungen angepasst werden zu können. Durch die Digitalisierung nach dem Abtasttheorem entstehen jedoch verhältnismäßig viele Digitalwerte, auf die relativ viele Rechenoperationen nach dem Schema von Fig. 2 anzuwenden sind. Das bedeutet relativ hohen Speicherbedarf und hohe Rechenbelastung des Mikrocontrollers 50, was bezüglich Herstellkosten, Stromaufnahme und Zykluszeit der Messwertaktualisierung zu Kompromissen führt, die deutlich vom Optimum entfernt sind.

Insgesamt wird aus den Fig. 1 und 2 und den Erläuterungen hierzu deutlich, dass die dort beschriebene analoge und digitale Signalverarbeitung von ZF-Signalen sehr aufwändig in Hinblick auf Rechenzeit, Stromaufnahme und Kosten ist, wenn die vom Füllstandsensor ausgegebenen Messwerte sehr genau sein sollen.

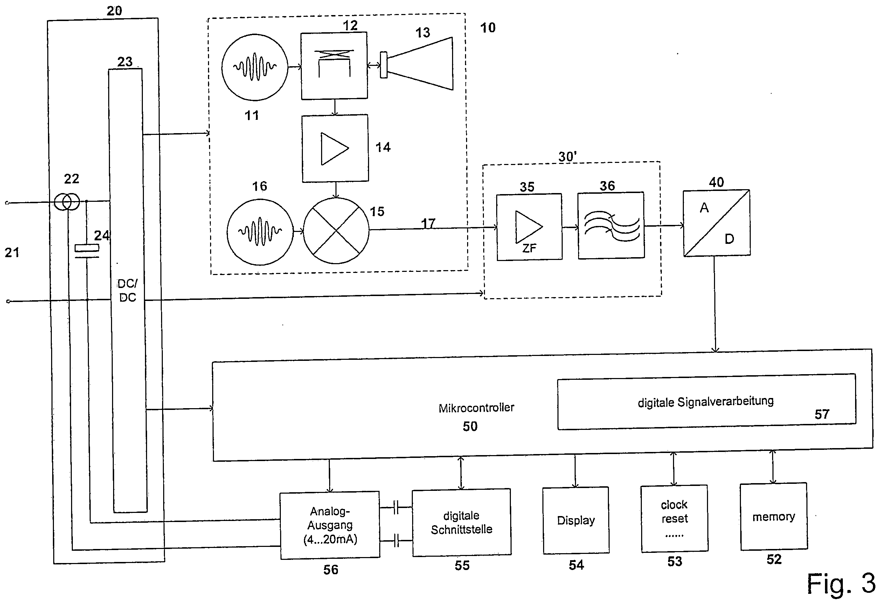

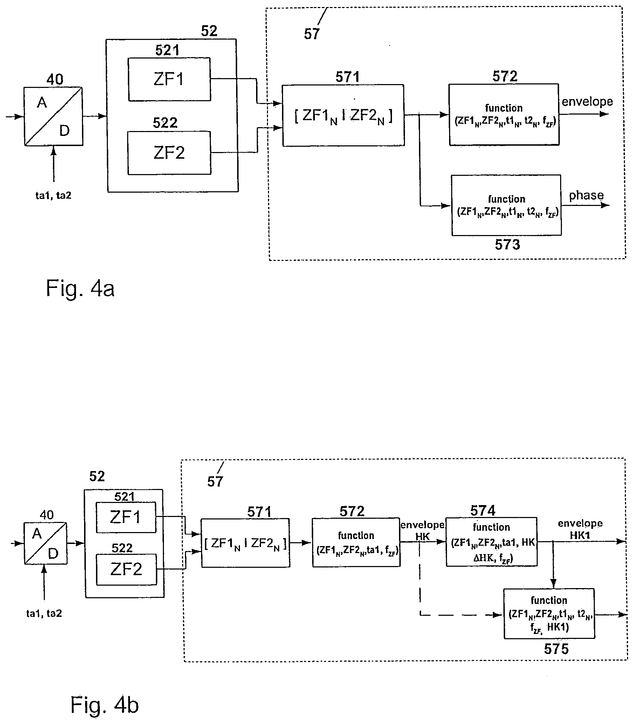

Die Figuren 3 und 4 zeigen demgegenüber Ausführungsbeispiele für die analoge und digitale Signalverarbeitung nach der vorliegenden Erfindung.

Fig. 3 unterscheidet sich dabei von Fig.1 nur im Bereich der analogen Signalverarbeitung 30' und einer unterschiedlichen digitalen Signalverarbeitung 57. Auf den Zweig zur analogen Bildung der logarithmischen Hüllkurve wurde in diesem Beispiel verzichtet, weil sich die Hüllkurve erfindungsgemäß sehr einfach aus den abgetasteten Digitalwerten des ZF-Signals errechnen lässt.

Dazu werden wie in Fig. 4 a dargestellt die Abtastwerte eines ZF-Signals in zwei Gruppen ZF1 (521) und ZF2 (522) unterteilt. Im einfachsten Fall geschieht dies dadurch, dass alle nacheinander vom A/D-Wandler mit den Abtast-Zeitabständen ta1 701 und ta2 702 abgetasteten ZF-Werte alternierend einer der beiden Gruppen zugeordnet werden. Es hat sich nun gezeigt, dass aus einem Wertepaar 571, bestehend aus jeweils einem Abtastwert aus jeder Gruppe, ein korrespondierender Hüllkurvenwert 572 und / oder Phasenwert 573 für das ZF-Signal errechnet werden kann. Es wird davon ausgegangen, dass die ZF-Frequenz $f_{ZF}$ hinreichend bekannt ist. Außerdem müssen selbstverständlich die Abtast-Zeitpunkte aller Abtastwerte bekannt sein, wobei es hier aber nicht auf absolute, sondern relative Zeitpunkte bezüglich eines Anfangs-Zeitpunkts des ZF-Signals ankommt. Bei vorgegebenem Abtastraster kann sich der Zeitpunkt beispielsweise einfach aus der Speicheradresse ergeben, in die der Wert abgelegt wurde.

Die Berechnungsformeln für die einzelnen Werte i von Hüllkurve und Phase lauten:

$$HK_i = \sqrt{ZF1_i^2 + \frac{(ZF2_i - ZF1_i * \cos(\omega * (ta1_i)))^2}{\sin(\omega * (ta1_i))^2}} \qquad (1)$$

$$\tan(\varphi_i) = \frac{\sin(\omega * t2_i) * ZF1_i - \sin(\omega * t1_i) * ZF2_i}{\sin(\omega * t1_i) * ZF2_i - \cos(\omega * t2_i) * ZF1_i} \qquad (2)$$

wobei gilt:

i: Laufvariable, i = 0,1,2,...
$HK_i$: Hüllkurvenwert
$\varphi_i$: Phasenwert
$ta1_i = t2_i - t1_i$; Zeitabstand zwischen Abtastung von $ZF1_i$ und $ZF2_i$
$ZF1_i$ : Abtastwert aus der ersten Gruppe
$t1_i$: Zeitpunkt der Abtastung von $ZF1_i$
$ZF2_i$: Abtastwert aus der zweiten Gruppe
$t2_i$: Zeitpunkt der Abtastung von $ZF2_i$
$\omega := 2*\pi*f_{ZF}$; Kreisfrequenz der Trägerschwingung der ZF

Diese errechneten Werte ergeben nicht mathematisch genau die gesuchten Amplituden der Hüllkurven- und Phasenwerte. Es entsteht ein Fehler, der abhängig von der Änderung der Hüllkurve zwischen den beiden Punkten eines Paars ist. Je höher die Hüllkurvenänderung, um so größer ist der potentielle Fehler. Deshalb hat es sich als vorteilhaft herausgestellt, den Zeitabstand zwischen den beiden Abtastzeitpunkten eines Paares relativ gering zu halten. Fig. 7 zeigt für den gleichen zeitlichen Ausschnitt aus dem ZF-Signal wie Fig. 6 ein vorteilhaftes Abtastraster. Zyklisch werden zwei Abtastungen im Zeitabstand von ta1 701 vorgenommen, wobei der erste Wert der ersten Gruppe und der zweite der zweiten Gruppe zugeordnet werden. Dies wiederholt sich mit dem Zeitabstand ta2 702. Die jeweiligen Abtastwerte sind als Punkte auf dem ZF-Signal eingetragen. Die aus jedem Abtastpaar nach obiger Formel errechneten Hüllkurvenwerte sind in Fig. 7 als ausgefüllte Quadrate auf der gestrichelt eingezeichneten idealen Hüllkurve zu sehen. In diesem Beispiel wurde für den Zeitabstand ta1 eine Zeit entsprechend einem Viertel der Periodendauer der ZF-Frequenz gewählt. Der Hüllkurvenwert ändert sich in dieser Zeit nur unwesentlich, weshalb der entstehende Berechnungsfehler relativ gering bleibt. Die Wahl eines Viertels der Periodendauer ist deshalb vorteilhaft, weil sich dann bei der Berechnung der Hüllkurve nach Formel (1) als Argumente der dort auftretenden Sinus- und Kosinusfunktion $\pi/2$ ergibt. Damit vereinfacht sich die Berechnung auf die Bildung der Wurzel aus der Quadratsumme der beiden Abtastwerte:

$$HK_i = \sqrt{ZF1_i^2 + ZF2_i^2} \qquad (3)$$

Außerdem ist zu beachten, dass neben vorteilhaft zu wählenden Abständen ta1 auch gewisse Abstände zu meiden sind. Dies sind alle Zeitabstände ta1 entsprechend der Hälfte der Periodendauer der ZF-Frequenz und alle Vielfachen davon.

Als weiterer sehr vorteilhafter Zeitabstand ta1 701 hat sich derjenige erwiesen, der etwa einem Achtel der Periodendauer der ZF-Frequenz entspricht, da in dieser sehr kurzen Zeit die Hüllkurvenänderung und damit der Berechnungsfehler sehr gering ist.

Ein anderer bzw. zusätzlicher Weg zur Verminderung des Fehlers geht aus einem mathematisch verbesserten Berechnungsansatz hervor, bei dem zusätzlich der Betrag der Hüllkurvenänderung $\Delta HK_i$ zwischen den beiden Abtastpunkten eines Paars ermittelt werden muss. Hier bietet sich ein iteratives Näherungsverfahren an, bei dem zuerst die noch fehlerbehafteten Hüllkurvenwerte nach obiger Formel (1) berechnet werden. Aus den zu einem bestimmten Hüllkurvenpunkt benachbarten Hüllkurvenwerten $HK_{i-1}$ und $HK_{i+1}$ berechnet man die näherungsweise Steigung der Hüllkurve aus der Geraden durch die beiden benachbarten Punkte und daraus die erste Näherung der Hüllkurvenänderung $\Delta HK_i$. Dann wendet man folgende iterative Berechnung an zur verbesserten Ermittlung HK1 dieses bestimmten Hüllkurvenwerts $HK_i$:

$$HK1_{j+1} = HK1_j - \frac{a4 * HK1_j^4 + a3 * HK1_j^3 + a2 * HK1_j^2 + a1 * HK1_j + a0}{4 * a4 * HK1_j^3 + 3 * a3 * HK1_j^2 + 2 * a2 * HK1_j + a1} \qquad (4)$$

mit

$j = 0,1,2,.....$

$$a4 = \sin^2(\omega * ta1_i)$$

$$a3 = 2 * \sin^2(\omega * ta1_i) * \Delta HK_i$$

$$a2 = \sin^2(\omega * ta1_i) * \Delta HK_i^2 + 2 * \cos(\omega * ta1_i) * ZF1_i * ZF2_i - ZF1_i^2 - ZF2_i^2$$

$$a1 = 2 * ZF1_i * \Delta HK_i * (\cos(\omega * ta1_i) * ZF2_i - ZF1_i)$$

$$a0 = -ZF1_i^2 * \Delta HK_i^2$$

und
$HK1_0 = HK_i$

$$\Delta HK_i = \frac{(HK_{i+1} - HK_{i-1}) * ta1_i}{t1_{i+1} - t1_{i-1}}$$

Dieses iterative Näherungsverfahren zur Lösung einer Gleichung 4. Ordnung nach Newton-Raphson lässt sich nach einer beliebigen Anzahl von Schritten abbrechen und führt zu einer deutlichen Verbesserung des errechneten Hüllkurvenwerts.

Fig. 8 zeigt den absoluten Berechnungsfehler (berechneter Wert der Hüllkurve minus exakter Wert der Hüllkurve) für die Hüllkurve des ZF-Signals von Fig. 5 bei Abtastung nach dem Beispiel von Fig. 7 als gestrichelte Linie vor und durchgezogene Linie nach Anwendung von 5 Iterationen des Näherungsverfahrens, aufgetragen über der Zeitskala. Die zugehörigen Maximalamplituden betragen für das Referenzecho 1 und für das Füllgutecho 0,4. Man erkennt daraus, dass der Fehler von maximal ca. 2,5% des richtigen Hüllkurvenwerts auf Werte von maximal ca. 0,1% reduziert wird.

Der Phasenwert, der definitionsgemäß der Phasenwinkel der Trägerschwingung eines bestimmten Echos zu einem einmal festgelegten Zeitpunkt ist, lässt sich alternativ zu obiger Berechnungsformel (2), bei der ebenso wie bei der Hüllkurvenberechnung ein gewisser Fehler entsteht, aus dem sehr viel exakteren Hüllkurvenwert nach Anwendung des Näherungsverfahrens bestimmen. Dazu ist die ZF-Schwingung eines Echos als komplexer Zeiger aufzufassen, von dem Betrag (=Hüllkurve) und Imaginäranteil (=Abtastwert) zu einem aktuellen Zeitpunkt bekannt sind. Damit lässt sich ein aktueller Phasenwinkel zu diesem Zeitpunkt berechnen. Der gesuchte Phasenwinkel des Echos in dem vorher definierten Zeitpunkt ergibt sich einfach aus dem zeitlichen Abstand zwischen aktuellem und definierten Zeitpunkt und der Periodendauer der ZF-Trägerschwingung.

Der grundsätzliche Signalverarbeitungsablauf für diese bevorzugte Ausführungsform ist in Fig. 4 b dargestellt. Er unterscheidet sich von dem Ablauf in Fig. 4 a nur dadurch, dass in einem weiteren Berechnungsvorgang 574 der zuvor ermittelte Hüllkurvenwert durch das geschilderte Näherungsverfahren verbessert wird. Aus dem verbesserten Hüllkurvenwert wird in einem weiteren Berechnungsschritt 575 bei Bedarf ein exakter Phasenwert ermittelt. Der Phasenwert kann natürlich auch wie gestrichelt eingezeichnet von dem zuerst berechneten Hüllkurvenwert abgeleitet werden, falls auf die Anwendung des Näherungsverfahrens verzichtet wird.

Vergleicht man die Abtastung nach dem erfindungsgemäßen Beispiel von Fig. 7 mit der Abtastung von Fig. 6, so fällt auf, dass bei Anwendung des erfindungsgemäßen Verfahrens nun nicht mehr der Zwang besteht, das Nyquist-Theorem der Abtastung einzuhalten. Der Abstand ta2 702 zwischen den Abtastpaaren kann in bestimmten Grenzen frei gewählt werden. Diese Grenzen ergeben sich einzig aus der ZF-Trägerfrequenz und der Bandbreite des ZF-Signals. Die Abtastung eines Signals kann man sich bekanntlich als Multiplikation des Signals mit einer Dirac-Pulsfolge vorstellen. Im Frequenzbereich betrachtet entspricht dies einer Faltung des Frequenzspektrums des ZF-Signals mit der Fouriertransformierten der Dirac-Pulsfolge. Aus dieser Faltung resultieren sehr (theoretisch unendlich) viele Frequenzbänder mit ZF-Bandbreite. Die Wiederholfrequenz der Dirac-Pulsfolge, die den Abtastabstand ta2 702 bestimmt, ist verantwortlich für die Lage dieser Frequenzbänder. Damit das abgetastete Signal nicht verfälscht wird, dürfen sich die Frequenzbänder nicht teilweise überlagern. Daraus resultieren folgende Forderungen für den Zeitabstand ta2 zwischen den Abtastpaaren:

$$ta2 \leq \frac{1}{2 * B} \qquad\qquad (5)$$

$$ta2 \neq \frac{n}{2 * f_{ZF} + B} \cdots \frac{n}{2 * f_{ZF} - B} \qquad\qquad (6)$$

mit

$f_{ZF}$: ZF-Trägerfrequenz
B: Bandbreite des ZF-Signals
n: natürliche Zahl, n = 1,2,3, ...

Für das bisher verwendete Beispiel mit $f_{ZF}$ = 160 kHz und angenommener Bandbreite B = 20 kHz folgt daraus, dass der Zeitabstand ta2 kleiner als 25 µs sein sollte. Außerdem darf der Zeitabstand ta2 beispielsweise nicht in dem Bereich zwischen 2,94 µs und 3,33 µs liegen. Aus obenstehender Ungleichung ergeben sich für n = 2 bis 8 weitere 7 Sperrbereiche für ta2, die hier nicht alle explizit genannt werden. Bei der Auswahl des geeigneten Abtastabstands ta2 wählt man vorzugsweise einen Wert etwa in der Mitte zwischen zwei verbotenen Bereichen nach der Formel

$$ta2 \approx \frac{2 * f_{ZF} * (2 * n + 1) - B}{8 * f_{ZF}^2 - 2 * B^2}$$

Bezogen auf die angeführten Zahlenwerte ist das beispielsweise ein Abstand von ca. 10,9 µs wie in Fig. 7 dargestellt oder 7,7 µs oder 4,6 µs.

Die ZF-Frequenzkomponente, die für die weitere Signalverarbeitung interessant ist, liegt bei der bevorzugten Wahl des Abtastabstands bei etwa einem Viertel der Abtastfrequenz. Für obiges Beispiel mit ta2 = 10,9 µs liegt die Bandmitte des betreffenden ZF-Bandes etwa bei 22,9 kHz, die Bandbreite beträgt nach wie vor 20 kHz. Das bedeutet, dass auf die Abtastfolgen, getrennt nach den beiden Gruppen, eine Filterung angewendet werden kann. In diesem Fall könnte das mit einem Bandfilter mit der Mittenfrequenz von 22,9 kHz und der Bandbreite von 20 kHz erfolgen. Durch den Einsatz eines solchen digitalen Filters, dessen Realisierung als FIR- oder IIR- Filter dem Fachmann bekannt ist, können sowohl Rauschanteile, die vom analogen Bandfilter vor der A/D-Wandlung nicht unterdrückt wurden, als auch ein störender Gleichspannungsanteil im ZF-Signal wirkungsvoll ausgefiltert werden.

Im Gegensatz zur eben beschriebenen Festlegung des Abtastabstands ta2 zwischen den benachbarten Abtastpaaren ist es auch möglich, genau einen Abstand entsprechend einer Periodendauer der ZF-Trägerfrequenz oder eines ganzzahligen Vielfachen davon zu wählen. Das hat den Vorteil, dass das ZF-Signal genau ins Basisband abgebildet wird und man anstelle des Bandfilters ein digitales Tiefpassfilter verwenden kann. Allerdings kann hier ein eventueller Gleichspannungsanteil auf dem ZF-Signal nicht mehr ausgefiltert werden und die Bildung der Hüllkurve kann so verfälscht werden.

Zusätzlich zur digitalen Bandpass- bzw. Tiefpassfilterung bietet sich auch eine Scharmittelung der abgetasteten Werte an. Eine Scharmittelung bedeutet wie bereits erwähnt eine Mittelwertbildung über Abtastwerte verschiedener aufeinander folgender ZF-Signale, die gleicher Echolaufzeit entsprechen. Wird die Scharmittelung vor der Bildung der Hüllkurve durchgeführt, spricht man von kohärenter Scharmittelung oder auch predetection integration, bei Scharmittelung der Hüllkurvenwerte von inkohärenter Scharmittelung oder postdetection integration. Obwohl durch beide Verfahren das Rauschen gegenüber dem Echosignal unterdrückt wird, ist die kohärente Scharmittelung in dieser Beziehung deutlich effektiver. Eine kohärente Scharmittelung lässt sich nach dem erfindungsgemäßen Verfahren sehr einfach durch getrennte Scharmittelung der beiden Abtastgruppen anwenden. Verglichen mit der inkohärenten Scharmittelung, die natürlich alternativ oder zusätzlich mit den errechneten Hüllkurvenwerten durchführbar ist, ist der Rechenaufwand lediglich verdoppelt.

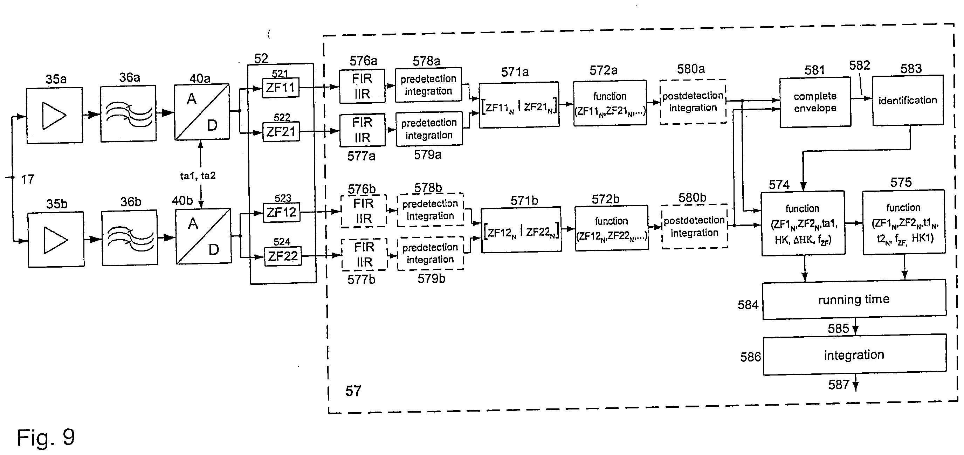

In Fig. 9 ist eine vorteilhafte Ausgestaltung einer analogen und digitalen Signalverarbeitung für einen Puls-Laufzeit-Füllstandsensor schematisch dargestellt. Diese Ausführung trägt dem Umstand hoher Signaldynamik dadurch Rechnung, dass das ZF-Signal in zwei parallele Kanäle aufgeteilt wird, in denen ZF-Verstärker 35a und 35b mit unterschiedlichen Verstärkungen v1 und v2 vorgesehen sind. Entsprechend sind auch zwei analoge Bandpassfilter 36a und 36b und zwei A/D-Wandler 40a und 40b vorhanden. Es wird davon ausgegangen, dass die Auflösung eines A/D-Wandlers nicht ausreicht, um sowohl größte als auch kleinste Echos zu digitalisieren. Wäre dies jedoch möglich, würde selbstverständlich ein einkanaliger Aufbau ausreichen. Jeder A/D-Wandler wandelt nach dem in Fig. 7 dargestellten Schema die Abtastwerte des ZF-Signals in je zwei Gruppen ZF1... und ZF2..., die im Speicher 52 zur weiteren digitalen Verarbeitung innerhalb der digitalen Signalverarbeitung 57 gesichert werden. Es sei hier noch angemerkt, dass die Aufgabe der beiden A/D-Wandler auch von einem mit mindestens zwei Eingängen ausgestatteten einzelnen A/D-Wandler übernommen werden kann. Die jeweils zwei Gruppen von Digitalwerten, von denen die Gruppen ZF11 521 und ZF21 522 beispielsweise kleine Echos und die Gruppen ZF12 523 und ZF22 524 große Echos entsprechend einem Verhältnis von v1 > v2 repräsentieren, werden bei Bedarf gruppenweise digital gefiltert 576a, 576b, 577a, 577b und kohärent schargemittelt 578a, 578b, 579a, 579b wie oben beschrieben. Dies bietet sich auf jeden Fall für die Gruppen der kleinen Echos an, da dort Echos vom Rauschen teilweise überdeckt sein können. Danach werden erfindungsgemäß Paare gebildet 571a, 571b, aus denen die Hüllkurvenwerte nach obenstehender Formel (1) bzw. (3) berechnet werden 572a, 572b. Nach einer bedarfsweisen inkohärenten Scharmittelung 580a, 580b kombiniert man die beiden getrennten Hüllkurven für große und kleine Echos zu einer Gesamthüllkurve 581. Dazu ist lediglich die Kenntnis des Verstärkungsunterschieds zwischen v1 und v2 sowie eine gewisse Überlappung der beiden Dynamikbereiche notwendig.

Diese Gesamthüllkurve 582 bildet die Grundlage für die Identifikation 583 von Referenzecho und Füllgutecho aus der Gesamtheit aller Echos eines Kurvenzugs. Die oben beschriebenen geringen Amplitudenfehler bei der Hüllkurvenberechnung sind für diesen Auswertungsschritt ohne weiteres zu tolerieren.

Zur Identifikation 583 der beiden gesuchten Echos sind beispielsweise folgende Verarbeitungsschritte notwendig: Zuerst müssen aus der Gesamtheit des ZF-Signals einzelne Echos separiert und hinsichtlich ihrer Merkmale charakterisiert werden. Die Detektion der Echos stützt sich beispielsweise auf eine Schwellwertkurve, die dem Gerät entweder fest vorgegeben ist oder während des Betriebs dynamisch erzeugt wird. Die gespeicherten Hüllkurvenwerte werden hinsichtlich ihrer Amplitude mit der zeitabhängigen Schwelle verglichen. Hüllkurvenwerte, die über der Schwelle liegen, weisen auf ein Echo an dieser Stelle hin. Um nur die relativ größten Echos eines ZF-Signals zu detektieren ist es möglich, die Schwelle schrittweise abzusenken, bis eine genügende Anzahl von Echos detektiert ist. Detektierte Echos werden auf Merkmale wie beispielsweise Maximalamplitude, Rauschabstand, Echolänge, Echoform, Mittelwert, Schwerpunkt und Flankensteilheit hin charakterisiert. Aus diesen Echomerkmalen lassen sich in gewissem Maße auch Rückschlüsse auf die Art des Behälters, die Beschaffenheit der Füllgutoberfläche und die Umgebungsbedingungen ziehen. Außerdem lassen sich aus den gegenseitigen Echoabständen bestimmte Reflexionsverhältnisse innerhalb des Behälters wie z.B. schräg liegende Schüttgutoberflächen oder mehrfach reflektierende gewölbte Behälterdecken ableiten. Diese Informationen können zum einen dazu beitragen, anwendungsbezogene Softwareparameter zur verbesserten Verarbeitung der abgetasteten Echowerte auszuwählen, und zum anderen dem Anwender neben der reinen Füllstandinformation auch weitergehende Hinweise zu den Umgebungsbedingungen im Behälter, der Funktionssicherheit des Sensors und der Messung im allgemeinen zu geben.

Aus der Gesamtheit der Echos eines ZF-Signals werden schließlich anhand aller gesammelten Merkmale das Referenzecho und das Echo von der Füllgutoberfläche identifiziert. Besonders die Identifikation des Füllgutechos ist unter Umständen nicht trivial. Verfahren, die neben den reinen Merkmalen der Echos, die sich aus einem bestimmten ZF-Signal ergeben, auch die Historie einer Messung bewerten, sind aus der US 11/202,007 oder US 60/601,929 bekannt, auf die hier verwiesen wird.

Um zu einem Messwert für den Füllstand zu gelangen muss nun noch der zeitliche Abstand zwischen dem Referenzecho und dem identifizierten Füllgutecho bestimmt werden 584. Diese Vermessung 584 stützt sich zunächst einmal auf die digitalen Hüllkurvenwerte beider Echos. Da diese aber wie bereits mehrfach erwähnt geringe Berechnungsfehler enthalten, kann für eine begrenzte Anzahl von Hüllkurvenpunkten das Näherungsverfahren nach oben stehender Formel (4) angewendet werden. Die betreffenden Punkte sind beispielsweise diejenigen der Hüllkurve im Zeitbereich der beiden zu vermessenden Echos. Die Information über deren zeitliche Lage wird von dem Block zur Identifikation 583 an den Block zur Verbesserung der Hüllkurvenwerte nach dem Näherungsverfahren 574 übergeben. Für die gleichen Punkte kann auch eine Berechnung der Phase 575 durchgeführt werden, um die Messgenauigkeit weiter zu steigern. Bezüglich der Art und Weise der Einbeziehung von Phasenwerten zur Verbesserung der Messgenauigkeit wird hier auf die DE 44 07 369 verwiesen.

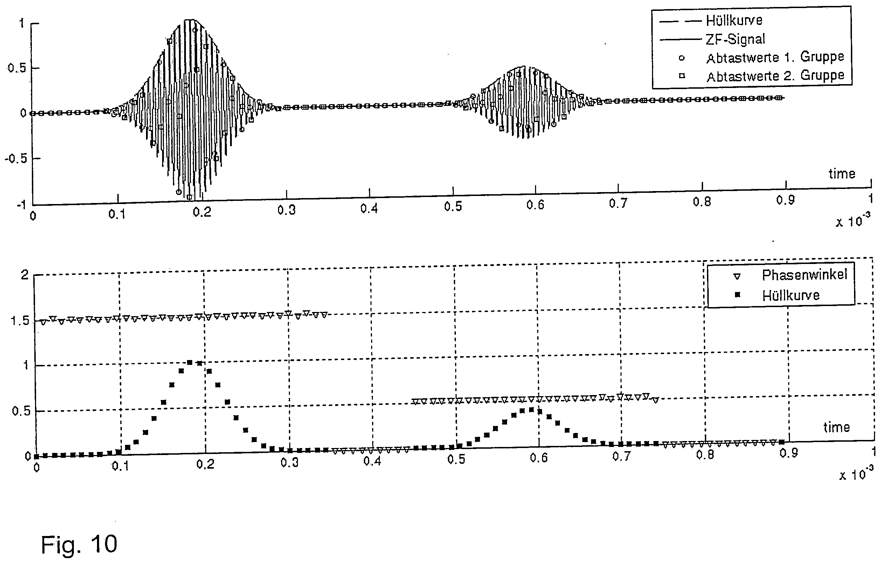

Fig. 10 zeigt einzelne Kurvenverläufe beziehungsweise Abtast- und Berechnungswerte aus der Signalverarbeitungskette von Fig. 9. Oben sind das idealisierte analoge ZF-Signal und zusätzlich als Punkte die daraus entnommenen Abtastwerte zu sehen. Die Darstellung beschränkt sich dabei auf einen der beiden Kanäle. Unten sind die aus jeweils einem Abtastpaar berechneten Hüllkurvenwerte und die daraus abgeleiteten Phasenwerte in der Einheit rad zu sehen.

Bei der Vermessung des Echoabstands 584 auf Basis der Hüllkurvenwerte hat sich gezeigt, dass der Abstand zwischen den jeweiligen Maxima den Echoabstand nur sehr ungenau beschreibt. Deutlich bessere Ergebnisse liefert die Messung zwischen Punkten auf den Echoflanken, deren Amplitude in einem definierten Verhältnis zur jeweiligen Maximalamplitude des Echos steht. Eine weitere Verbesserung erhält man durch Interpolation von Zwischenpunkten zu den abgetasteten Hüllkurvenpunkten im Bereich der zu vermessenden Echoflanken. Geeignete Interpolationsverfahren wie beispielsweise lineare Interpolation, Polynom-Interpolation oder Spline-Interpolation sind allgemein bekannt. Alternativ hierzu gibt es auch Verfahren, bei denen die Lage eines Echos dadurch bestimmt wird, dass ein vorher definiertes Normecho bzw. ein Abschnitt eines solchen mit den Punkten des aktuell zu vermessenden Echos mathematisch bestmöglich zur Deckung gebracht wird. Aus der dadurch festgelegten Lage des Normechos ergibt sich die gesuchte zeitliche Lage des aktuellen Echos. In die gleiche Richtung zielen Verfahren zur Korrelation der ZF-Kurve oder Hüllkurve mit einem sogenannten Normecho. Zu dem Zeitpunkt, an dem das Korrelationsergebnis maximal ist, passt das Normecho am besten auf die betreffende Kurve, weshalb dieser Zeitpunkt auch gleichzeitig die zeitliche Lage des Echos repräsentiert. Zum Schluss entsteht pro Messzyklus ein Messwert 585 für die Entfernung des Füllgutechos vom Referenzecho. Dieser kann unter Kenntnis der festgelegten Sensor- und Behälterparameter in eine Füllhöhe umgerechnet werden.

Eine weitere Verbesserung der Messgenauigkeit ist schließlich dadurch erzielbar, dass solche Messwerte 585 verschiedener aufeinander folgender Messzyklen gemittelt werden 586. Die Zeitkonstante der Mittelung kann dabei fest eingestellt sein oder aber auch dynamisch angepasst werden. Unterscheiden sich neu ermittelte Messwerte nur gering vom zuvor ermittelten Messwert, wird die Zeitkonstante bis zu einem gewissen Grad erhöht. Falls aber mehrere neue Messwerte hintereinander sich davon unterscheiden, deutet das auf Füllgutbewegung hin und die Zeitkonstante sollte verkleinert werden. Ebenso ist es in bestimmten Fällen nützlich, eine Hysterese für die Messwertausgabe vorzusehen. Dies hat dann seine Berechtigung wenn davon auszugehen ist, dass sich die Bewegungsrichtung der Füllgutoberfläche nur selten umkehrt und für diesen Fall eine geringe Verzögerung der ausgegebenen Messwerte in Kauf genommen wird. Der auf diese Art festgelegte Messwert 587 ist schließlich derjenige, der vom Sensor als Füllstand analog und / oder digital ausgegeben wird.

Somit wurde gezeigt, dass durch Abtastung relativ weniger Werte des ZF-Signals sehr einfach Hüllkurve und auch Phasenwinkel des ZF-Signals aus jeweils nur zwei Abtastpunkten zu berechnen sind. Damit wird gegenüber dem Stand der Technik der Bedarf an Speicherplatz und Rechenzeit für die Digitalisierung und Auswertung des ZF-Signals deutlich reduziert, ohne auf die Vorteile zu verzichten, die eine überwiegend digitale Signalverarbeitung bietet. Diese Vorteile liegen darin, dass man frei von Bauteiletoleranzen ist, die Verarbeitung leicht an verschiedene Sensorparameter angepasst werden kann, durch digitale Filterung und kohärente bzw. inkohärente Scharmittelung Signal-Rausch-Abstand gewonnen und durch Auswertung der Phase die Messgenauigkeit erhöht werden kann. Ein weiterer großer Vorteil besteht darin, dass die Abtastfrequenz an verschiedene Sensortypen und verschiedene Leistungsversorgungen der Sensoren angepasst werden kann. Bei Zweileitersensoren mit analoger Messwertausgabe in Form des zwischen 4 und 20 mA aufgenommenen Stroms ist die für den Sensor zur Verfügung stehende Leistung relativ gering. Diesem Umstand kann durch Anpassung der Abtastfrequenz begegnet werden. Es ist sogar möglich innerhalb einer ZF-Kurve die Abtastfrequenz zu variieren, um z.B. die interessierenden Bereiche von Referenzecho und Füllgutecho feiner abzutasten als die restlichen Bereiche ohne die zu vermessenden Echos.

Das Verfahren eignet sich sowohl als Ersatz als auch als Ergänzung zum bisher überwiegend verwendeten analogen Logarithmierer mit anschließender Digitalisierung der logarithmischen Hüllkurve.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei daraufhingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Verfahren zur Digitalisierung und anschließenden Verarbeitung eines Zwischenfrequenz-Signals für die Füllstandmessung für einen Puls-Laufzeit-Füllstandsensor, das Verfahren umfassend die folgenden Schritte:

   Paarweise Abtasten des ZF-Signals zu diskreten Paaren von Zeitpunkten;
   Wandeln des abgetasteten ZF-Signals in digitale Abtastwerte;
   wobei die nachfolgende Verarbeitung der digitalen Abtastwerte aus jeweils genau einem der digitalen Abtastwerte-Paare (703, 704 und 705, 706) mindestens einen neuen die ZF-Kurve charakterisierenden Wert errechnet, wobei das ZF-Signal aus einer amplitudenmodulierten Trägerschwingung mit der ZF-Frequenz besteht, wobei jeweilige Zeitintervalle zwischen aufeinanderfolgenden Paaren von Zeitpunkten grösser als der Kehrwert der doppelten ZF-Frequenz sind.

2. Verfahren nach Anspruch 1, wobei der charakterisierende Wert ein Hüllkurvenwert ist.

3. Verfahren nach Anspruch 2, **dadurch gekennzeichnet, dass** die Berechnung des Hüllkurvenwert nach

$$HK_i = \sqrt{ZF1_i^2 + \frac{(ZF2_i - ZF1_i * \cos(\omega * (ta1_i)))^2}{\sin(\omega * (ta1_i))^2}}$$

   erfolgt, wobei es gilt:

   i: Laufvariable, i = 0,1,2,...
   $HK_i$: Hüllkurvenwert
   $ta1_i = t2_i - t1_i$; Zeitabstand zwischen Abtastung von $ZF1_i$ und $ZF2_i$
   $ZF1_i$: Abtastwert aus der ersten Gruppe
   $t1_i$: Zeitpunkt der Abtastung von $ZF1_i$
   $ZF2_i$: Abtastwert aus der zweiten Gruppe
   $t2_i$: Zeitpunkt der Abtastung von $ZF2_i$
   $\omega$: $= 2*\pi*f_{ZF}$; Kreisfrequenz der Trägerschwingung der ZF

4. Verfahren nach Anspruch 1, wobei der charakterisierende Wert ein Phasenwert ist.

5. Verfahren nach Anspruch 1, wobei für die Zeitabstände zwischen je zwei aufeinanderfolgen Abtastwerte-Paare (703, 704 und 705, 706) gilt:

$$Zeitabstände \notin \left[ \frac{n}{2 * f_{ZF} + B} \cdots \frac{n}{2 * f_{ZF} - B} \right],$$

   mit

   $f_{ZF}$: ZF-Trägerfrequenz
   B: Bandbreite des ZF-Signals
   n: natürliche Zahl, n = 1,2,3, ...

6. Verfahren nach Anspruch 2, wobei der Hüllkurvenwert auf Basis eines Näherungsverfahrens nach

$$HK1_{j+1} = HK1_j - \frac{a4 * HK1_j{}^4 + a3 * HK1_j{}^3 + a2 * HK1_j{}^2 + a1 * HK1_j + a0}{4 * a4 * HK1_j{}^3 + 3 * a3 * HK1_j{}^2 + 2 * a2 * HK1_j + a1}$$

iterativ verbessert wird.

**7.** Verfahren nach Anspruch 2 oder 6, wobei der Phasenwert aus Abtastwerten und Hüllkurvenwerten errechnet wird.

**8.** Verfahren nach Anspruch 1, wobei der Zeitabstand (701) der beiden digitalen Abtastwerte eines jeweiligen Abtastwerte-Paares (703, 704 und 705, 706) ein Viertel der Periodendauer der ZF-Frequenz beträgt.

**9.** Verfahren nach Anspruch 1, wobei ein Hüllkurvenwert als Wurzel aus einer Quadratsumme der beiden digitalen Abtastwerte eines jeweiligen Abtastwerte-Paares gebildet wird.

**10.** Verfahren nach Anspruch 1, wobei der Zeitabstand der beiden digitalen Abtastwerte eines jeweiligen Abtastwerte-Paares (703, 704 und 705, 706) ein Achtel der Periodendauer der ZF-Frequenz beträgt.

**11.** Verfahren nach Anspruch 1, wobei der Zeitabstand (702) zwischen zwei aufeinander folgenden Abtastwerte-Paaren (703, 704 und 705, 706) der Periodendauer der ZF-Frequenz oder einem Vielfachen davon entsprechen.

**12.** Verfahren nach Anspruch 1 oder 6, wobei der Zeitabstand (702) zwischen zwei aufeinander folgenden Abtastwerte-Paaren (703, 704 und 705, 706) nicht genau einer Periodendauer entspricht.

**13.** Puls-Laufzeit-Füllstandsensor zum Bestimmen eines Füllstands in einem Tank, der Füllstandsensor umfassend:

eine Abtastvorrichtung, ausgestaltet zum paarweisen Abtasten eines ZF-Signals zu diskreten Paaren von Zeitpunkten und zur Umwandlung von Abtastwerten in digitale Abtastwerte;
eine digitale Signalverarbeitungsvorrichtung (57), ausgestaltet zur nachfolgenden Verarbeitung der digitalen Abtastwerte durch Berechnung mindestens eines neuen die ZF-Kurve charakterisierenden Wert aus jeweils genau einem der digitalen Abtastwerte-Paare (703, 704 und 705, 706), wobei das ZF-Signal aus einer amplitudenmodulierten Trägerschwingung mit der ZF-Frequenz besteht, wobei jeweilige Zeitintervalle zwischen aufeinanderfolgenden Paaren von Zeitpunkten grösser als der Kehrwert der doppelten ZF-Frequenz sind.

**Claims**

**1.** A method for digitizing and subsequent processing an intermediate frequency (IF) signal for the fill level measurement for a pulse running time fill level sensor, the method comprising the following steps:

pair sampling the IF signal at discrete pairs of points in time;
converting the sampled IF signal into digital sampling values;
wherein the subsequent processing of the digital sampling values calculates respectively from exactly one of the pairs of the digital sampling values (703, 704 and 705, 706) at least one new value characterizing the IF curve, wherein the IF signal consists of an amplitude modulated carrier wave having the IF frenquency, wherein respective time intervals between consecutive pairs of points in time are greater than the reciprocal value of a double IF frequency.

**2.** The method according to claim 1, wherein the characterizing value is an envelope value.

**3.** The method according to claim 2, **characterized in that** the calculation of the envelope value is performed according to

$$HK_i = \sqrt{IF1_i{}^2 + \frac{(IF2_i - IF1_i * \cos(\omega * (ta1_i)))^2}{\sin(\omega * (ta1_i))^2}}$$

wherein:

i: running variable, I = 0, 1, 2, ...
$HK_i$: envelope value
$ta1_i = t2_i - t1_i$; time interval between sampling of $IF1_i$ and $IF2_i$
$IF1_i$ : sampling value from the first group
$t1_i$: sampling point in time of $IF1_i$
$IF2_i$: sampling value from the second group
$t2_i$: sampling point in time of $IF2_i$
$\omega$: $= 2*\pi*f_{IF}$; angular frequency of the IF carrier wave

4. The method according to claim 1, wherein the characterizing value is a phase value.

5. The method according to claim 1, wherein for the time intervals between every two consecutive pairs of the sampling values (703, 704 and 705, 706) the following holds true:

$$\text{Time int ervals} \notin \left[ \frac{n}{2 * f_{IF} + B} \cdots \frac{n}{2 * f_{IF} - B} \right],$$

with

$f_{IF}$: IF carrier frequency
B: bandwidth of the IF signal
n: natural number, n = 1, 2, 3, ...

6. The method according to claim 2, wherein the envelope value is improved iteratively based on an approximation method according to

$$HK1_{j+1} = HK1_j - \frac{a4 * HK1_j^4 + a3 * HK1_j^3 + a2 * HK1_j^2 + a1 * HK1_j + a0}{4 * a4 * HK1_j^3 + 3 * a3 * HK1_j^2 + 2 * a2 * HK1_j + a1}$$

7. The method according to claim 2 or 6, wherein the phase value is calculated from sampling values and envelope values.

8. The method according to claim 1, wherein the time interval (701) of the two digital sampling values of a respective pair of the sampling values (703, 704 and 705, 706) is one quarter of the IF frequency period.

9. The method according to claim 1, wherein an envelope value is formed as root of a sum of squares of the two digital sampling values of a respective pair of the sampling values.

10. The method according to claim 1, wherein the time interval of the two digital sampling values of a respective pair of the sampling values (703, 704 and 705, 706) is one eighth of the IF frequency period.

11. The method according to claim 1, wherein the time interval (702) between two consecutive pairs of the sampling values (703, 704 and 705, 706) correspondes to the IF frequency period or a multiple thereof.

12. The method according to claim 1 or 6, wherein the time interval (702) between two consecutive pairs of the sampling values (703, 704 and 705, 706) does not match exactly one period.

13. A pulse running time fill level sensor for determining a fill level in a tank, the fill level sensor comprising:

a sampling device, configured to pair sample an IF signal at discrete pairs of points in time and to convert sampling values into digital sampling values;
a digital signal processing device (57), configured to subsequently process the digital sampling values through calculation of at least one new value characterizing the IF curve from respectively exactly one of the pairs of the digital sampling values (703, 704 and 705, 706), wherein the IF signal consists of an amplitude modulated carrier wave having the IF frenquency, wherein respective time intervals between consecutive pairs of points in time are greater than the reciprocal value of the double IF frequency.

**Revendications**

1. Procédé de numérisation et de traitement subséquent d'un signal de fréquence intermédiaire (ZF) pour la mesure de niveau de remplissage pour un capteur de niveau de remplissage à temps de propagation d'impulsions, le procédé comprenant les étapes consistant à :

échantillonner le signal ZF par paires à des paires discrètes d'instants ;
convertir le signal ZF échantillonné en échantillons numériques ;
dans lequel le traitement ultérieur des échantillons numériques calcule à partir de chaque fois exactement une des paires d'échantillons numériques (703, 704 et 705, 706) au moins une nouvelle valeur caractéristique de la courbe ZF, le signal ZF étant constitué d'une oscillation porteuse modulée en amplitude de fréquence ZF, des intervalles de temps respectifs entre des paires successives d'instants étant supérieurs à l'inverse du double de la fréquence ZF.

2. Procédé selon la revendication 1, dans lequel la valeur caractéristique est une valeur de courbe enveloppe.

3. Procédé selon la revendication 2, **caractérisé en ce que** le calcul de la valeur de courbe enveloppe s'effectue selon

$$HK_i = \sqrt{ZF1_i^2 + \frac{(ZF2_i - ZF1_i * \cos(\omega * (ta1_i)))^2}{\sin(\omega * (ta1_i))^2}}$$

où :

i : variable courante, i = 0,1,2,...
$HK_i$ : valeur de courbe enveloppe
$ta1_i = t2_i - t1_i$; intervalle de temps entre l'échantillonnage de $ZF1_i$ et $ZF2_i$
$ZF1_i$: échantillon du premier groupe
$t1_i$: instant de l'échantillonnage de $ZF1_i$
$ZF2_i$ : échantillon du deuxième groupe
$t2_i$ : instant de l'échantillonnage de $ZF2_i$
$\omega$ : = $2*\pi*f_{ZF}$; pulsation de l'oscillation porteuse de ZF

4. Procédé selon la revendication 1, dans lequel la valeur caractéristique est une valeur de phase.

5. Procédé selon la revendication 1, dans lequel, pour les intervalles de temps entre deux paires d'échantillons successives (703, 704 et 705, 706), il s'applique :

$$Intervalles\ de\ temps \notin \left[\frac{n}{2*f_{ZF}+B}\right] \dots \left[\frac{n}{2*f_{ZF}-B}\right],$$

avec

$f_{ZF}$: fréquence porteuse de ZF
B : largeur de bande du signal ZF
n : nombre naturel, n = 1,2,3, ...

6. Procédé selon la revendication 2, dans lequel la valeur de courbe enveloppe est améliorée de façon itérative sur la base d'un procédé d'approximation selon

$$HK1_{j+1} = HK1_j - \frac{a4 * HK1_j^4 + a3 * HK1_j^3 + a2 * HK1_j^2 + a1 * HK1_j + a0}{4 * a4 * HK1_j^3 + 3 * a3 * HK1_j^2 + 2 * a2 * HK1_j + a1}$$

7. Procédé selon la revendication 2 ou 6, dans lequel la valeur de phase est calculée à partir d'échantillons et de valeurs de courbe enveloppe.

8. Procédé selon la revendication 1, dans lequel l'intervalle de temps (701) entre deux échantillons numériques d'une paire d'échantillons respective (703, 704 et 705, 706) est un quart de la durée de période de la fréquence ZF.

9. Procédé selon la revendication 1, dans lequel une valeur de courbe enveloppe est formée comme racine à partir d'une somme des carrés des deux échantillons numériques d'une paire d'échantillons respective.

10. Procédé selon la revendication 1, dans lequel l'intervalle de temps entre deux échantillons numériques d'une paire d'échantillons respective (703, 704 et 705, 706) est un huitième de la durée de période de la fréquence ZF.

11. Procédé selon la revendication 1, dans lequel l'intervalle de temps (702) entre deux paires d'échantillons successives (703, 704 et 705, 706) correspond à la durée de période de la fréquence ZF ou à un multiple de celle-ci.

12. Procédé selon la revendication 1 ou 6, dans lequel l'intervalle de temps (702) entre deux paires d'échantillons successives (703, 704 et 705, 706) ne correspond pas exactement à une durée de période.

13. Capteur de niveau de remplissage à temps de propagation d'impulsions pour déterminer un niveau de remplissage dans un réservoir, le capteur de niveau de remplissage comprenant :

un dispositif d'échantillonnage conçu pour échantillonner un signal ZF par paires à des paires discrètes d'instants et pour convertir les échantillons en échantillons numériques ;
un dispositif de traitement de signaux numériques (57) conçu pour traiter ultérieurement les échantillons numériques en calculant au moins une nouvelle valeur caractéristique de la courbe ZF à partir de chaque fois exactement une des paires d'échantillons numériques (703, 704 et 705, 706), le signal ZF étant constitué d'une oscillation porteuse modulée en amplitude de fréquence ZF, des intervalles de temps respectifs entre des paires successives d'instants étant supérieurs à l'inverse du double de la fréquence ZF.

Fig. 1

Fig. 2

Fig. 3

**52**

**521**
ZF1

**522**
ZF2

**40**
A / D

ta1, ta2

**57**

**571**
$[\ ZF1_N\ |\ ZF2_N\ ]$

**572**
function
$(ZF1_N, ZF2_N, t1_N, t2_N, f_{ZF})$
envelope

**573**
function
$(ZF1_N, ZF2_N, t1_N, t2_N, f_{ZF})$
phase

Fig. 4a

**52**

**521**
ZF1

**522**
ZF2

**40**
A / D

ta1, ta2

**57**

**571**
$[\ ZF1_N\ |\ ZF2_N\ ]$

**572**
function
$(ZF1_N, ZF2_N, ta1, f_{ZF})$

envelope HK

**574**
function
$(ZF1_N, ZF2_N, ta1, HK, \Delta HK, f_{ZF})$

envelope HK1

**575**
function
$(ZF1_N, ZF2_N, t1_N, t2_N, f_{ZF}, HK1)$

Fig. 4b

Fig. 5

Fig. 8

23

Fig. 6

Fig. 7

Fig. 9

Fig. 10

**EP 1 984 707 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 60772701 B
- DE 102006006572
- DE 3107444
- DE 4407369
- DE 10164030
- DE 10140346
- US 20030021186 A1
- EP 1235059 A
- US 11202007 B
- US 60601929 B